# EUROPEAN PATENT SPECIFICATION

(11) **EP 3 797 654 B1**
(45) Date of publication and mention of the grant of the patent: **22.12.2021**
(21) Application number: 20196706.4
(22) Date of filing: 17.09.2020
(51) Int. Cl.: A47J 31/42, A47J 31/52

(54) **CUSTOMIZABLE COFFEE DISPENSING SYSTEM**
ANPASSBARES KAFFEEAUSGABESYSTEM
SYSTÈME DE DISTRIBUTION DE CAFÉ PERSONNALISABLE

(30) Priority: 30.09.2019 IT 201900017582
(43) Date of publication of application: 31.03.2021
(73) Proprietor: Universita' Degli Studi Di Camerino, 62032 Camerino (MC) (IT); SIMONELLI GROUP S.P.A., 62020 Belforte del Chienti (MC) (IT)
(72) Inventor: FIORETTI, Lauro, 62010 MOGLIANO (MC) (IT); MAPONI, Pierluigi, 62027 SAN SEVERINO MARCHE (MC) (IT); PIERGALLINI, Riccardo, 06127 PERUGIA (IT); VITTORI, Sauro, 63072 CASTIGNANO (AP) (IT); GIACOMINI, Josephin, 62010 TREIA (MC) (IT)
(74) Representative: Cutropia, Gianluigi

(56) References cited:
- EP-A1- 2 279 683
- EP-A1- 2 314 188
- EP-A1- 2 392 239
- EP-A1- 3 162 256
- EP-B1- 2 624 733

## Description

The present invention relates to a customizable coffee dispensing system.

As it is known, catering services, such as bars, restaurants and the like, generally comprise a coffee machine used to dispense liquid coffee by means of an infusion of ground coffee. Considering that ground coffee is rapidly perishable, said catering services also comprise a grinding machine to grind coffee beans in such a way to obtain ready-to-use ground coffee.

Moreover, automatic coffee vendor machines that comprise a grinding machine and a coffee machine are known.

In the case of catering services, the possibility to customize coffee according to the consumer's requirements is exclusively entrusted to the experience of the operator who, according to the customer's requirements and to the functionality of the coffee machine, can set some parameters with the control panel of the machine in order to control the coffee extraction process.

Automatic coffee vendor machines have a control panel that can be used by the consumer to set a very limited number of parameters, such as for example the addition of sugar to the coffee and the strength of the coffee.

Evidently, the coffee dispensing systems of the prior art have a limited customization function that depends on the operator and does not take into account the actual requirements and needs of the customer.

The Italian patent IT1411701, in the name of the same applicant, discloses a coffee machine with a control system of the infusion temperature.

EP3162256, in the name of the same applicant, discloses a coffee dispensing system that comprises a grinding machine and a coffee machine provided with load cells to detect the weight of the ground coffee dispensed in a filter-holder and the weight of the liquid coffee dispensed in a cup.

EP3409146, in the name of the same applicant, discloses a coffee machine with a pre-infusion valve controlled with a pulse train by a pulse width modulation (PWM) device.

EP2314188 discloses a coffee dispensing system according to the preamble of claim 1.

EP2392239 discloses a configuration method of a coffee machine that involves evaluating an input by a control unit based on comparison of input flavor parameters with a predefined dataset, which comprises a control parameter for controlling components of an automatic coffee machine.

The purpose of the present invention is to eliminate the drawbacks of the prior art by disclosing a coffee dispensing system that can be customized according to the customer's requirements.

Another purpose of the invention is to provide such a coffee dispensing system that is efficient, simple and easy to use for the consumer and for the operator.

Another purpose of the invention is to disclose such a coffee dispensing system that is versatile and suitable for being applied in coffee machines for the catering sector and in automatic coffee vendor machines.

These purposes are achieved according to the invention with the characteristics of the independent claim 1.

Advantageous embodiments of the invention appear from the dependent claims.

The coffee dispensing system of the invention is defined in the independent claim 1.

Additional features of the invention will be clearer from the following detailed description, which refers to a merely illustrative, not limiting embodiment, as shown in the appended figures, wherein:
Fig. 1 is a block diagram that diagrammatically shows the coffee dispensing system according to the invention;
Fig. 2 is a block diagram that shows a grinding machine and a coffee machine of the coffee dispensing system of Fig. 1 in detail; and
Fig. 3 is a table of possible input parameters that can be selected by the user.

With reference to the Figures, the coffee dispensing system according to the invention is disclosed, which is generally indicated with reference numeral (100).

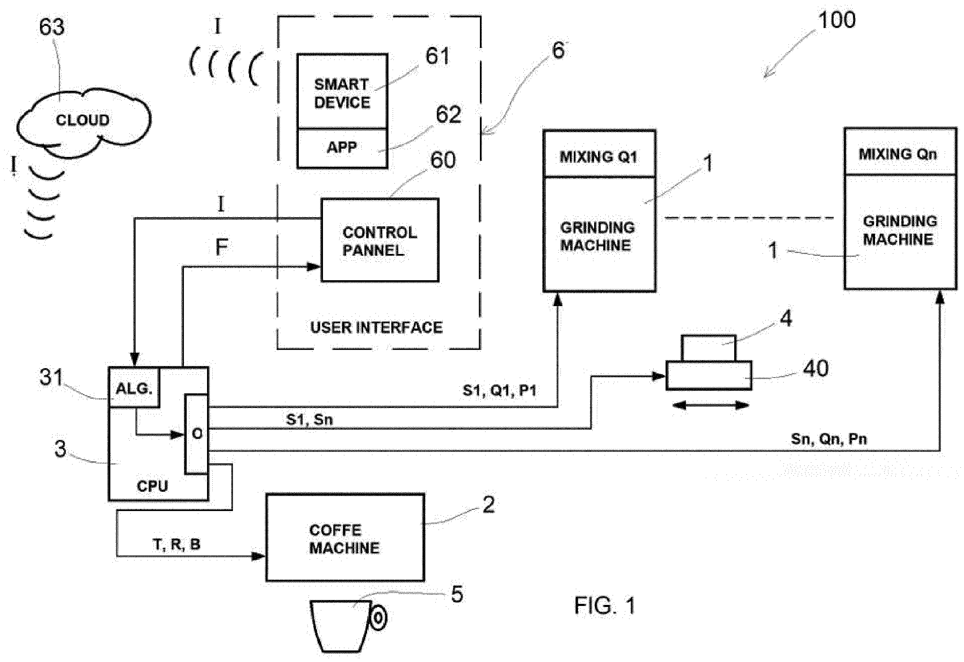

With reference to Fig. 1, the system (100) comprises a plurality of grinding machines (1) and a coffee machine (2) operatively connected to a CPU (3). A different mix (a1, ... An) of coffee beans suitable for being ground to obtain ground coffee is loaded in each grinding machine (1).

The coffee bean mix (a1, ....an) can have different parameters that define the organoleptic characteristics of the mix. Said parameters can be, for instance: robust taste, roast, aroma, etc.

A filter holder (4) is suitable for containing a ground coffee dose. The filter holder (4) is suitable for being disposed in each grinding machine (1) in such a way to be filled with ground coffee to form a desired dose of ground coffee. Moreover, the filter holder (4) is suitable for being disposed in the coffee machine (2) for infusing the ground coffee panel and dispensing liquid coffee in a cup (5).

A user interface (6) is operatively connected to the CPU (3) in order to display the information and enter the commands.

The grinding machines (1) and the coffee machine (2) can be programmed according to the type of coffee selected by the consumer; more precisely, some parameters of the grinding machines (1) and of the coffee machine (2) can vary according to the type of coffee, as explained in detail hereinafter.

The user interface (6) is suitable for sending input parameters (I) selected by the user according to the desired type of coffee to the CPU.

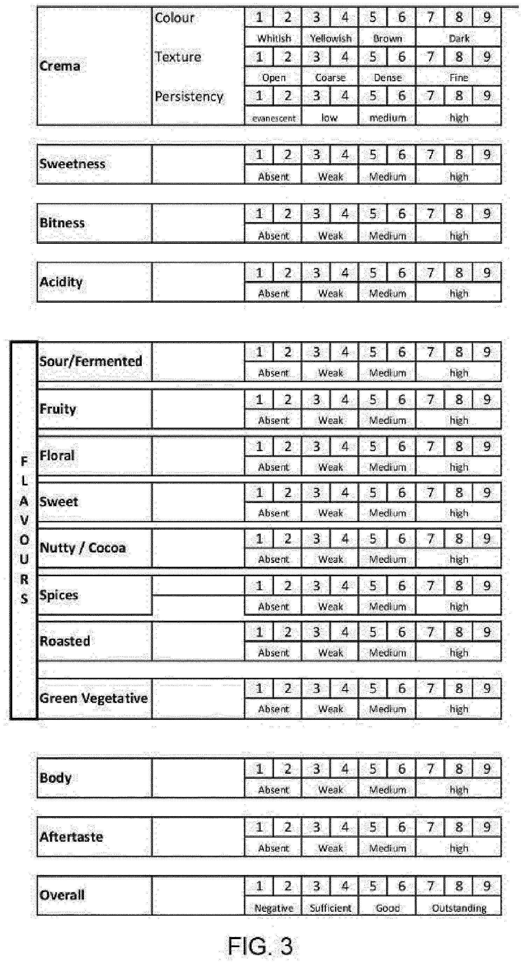

With reference to Fig. 3, the input parameters (I) can be, for example, one or more of the following coffee characteristics: cream, sweetness, acidity, aroma, body, aftertaste, smell, etc. The cream can be divided into color, texture and persistence. Aromas can be divided in various types of aromas, such as fermented, fruity, floral, sweet, nutty, spices, roasted, green vegetative, etc. A score can be given for each input parameter (I), for example from 1 to 9.

According to the input parameters (I) received from the user interface (6), the CPU calculates output parameters (O) to control the grinding machines (1) and the coffee machine (2), in such a way to set certain parameters of the grinding machines (1) and of the coffee machine (2).

The output parameters (O) are:
- selection (S1, ... Sn) of the grinding machines (1) to be used according to the type of coffee mix (a1, ....an),
- quantity in weight (Q1, ... Qn) of ground coffee to be dispensed by each selected grinding machine in order to form a coffee dose,
- pressing (P1, ... Pn) of the ground coffee in the filter-holder (4) in each selected grinding machine,
- temperature (T) of the infusion water in the coffee machine (2),
- flow/pressure ratio (R) of the infusion water in the coffee machine (2),
- brew rate (B) intended as ratio between the weight of the ground coffee and the weight of the liquid coffee.

An algorithm (31) calculates the output parameters (O) based on the input parameters (I). Said algorithm (31) was created based on a chemical-physical model of water percolation through a ground coffee panel. Such a percolation model takes into account the variation of chemical compounds (chlorogenic acids, lipids, caffeine, etc.) that are developed in the coffee based on the variation of the output parameters (O) set in the grinding machines and in the coffee machine. The input parameters (I) were defined based on the chemical compounds, taking into account the variation of said chemical compounds.

If the system (100) is installed in a catering point and the grinding machines and the coffee machine are physically separated, the user interface (6) may comprise a control panel (60). In such a case, the user (consumer) informs the operator (bar tender) about the desired type of coffee and the operator enters the input parameters (I) with the control panel (60).

When the algorithm (31) has calculated the output parameters (O), the CPU (3) sends information (F) on the selected grinding machines to the control panel (60), in such a way that the operator can display the selected grinding machines and sequentially position the filter-holder (4) only in the selected grinding machines.

In this way, a preferred ground coffee mix is created in the filter-holder (4) by combining several coffee mixes (a1, .... an) contained in the grinding machines with a different quantity and a different pressing for each mix.

Successively, the operator places the filter-holder (4) in the coffee machine (2) and liquid coffee is automatically extracted in the cup (5), with the selected values in terms of temperature (T) of the infusion water, flow/pressure ratio (R) and brew rate (B).

Advantageously, in order to avoid the need for the operator to position the filter-holder (4) in the selected grinding machines (1) and finally in the coffee machine (2), the filter-holder (4) can be mounted on a mobile slide (40) that receives information from the CPU (3) on the selected grinding machines in such a way to be sequentially moved to each selected grinding machine and finally to the coffee machine (2). The slide (40) can be operated by actuators.

Advantageously, in order to avoid the need for the operator to enter the input parameters (I) with the control panel (60), the user interface (6) may comprise a smart device (61) provided to each user/consumer. An app (62) is installed in each smart device (61).

With said app (62) the user can set the input parameters (I) in order to select the desired type of coffee directly. Then, the smart device (61) can be connected to the CPU (3) in wireless mode. The app (62) sends the input parameters (I) to the CPU (3) that calculates the output parameters (O) in order to control the coffee dispensing system (100).

Advantageously, the app (62) is connected to a cloud (63) on the Internet whereto the CPU (3) is connected.

If the coffee dispensing system (100) is an automatic coffee vendor machine, the grinding machines (1) and the coffee machine (2) are enclosed in a frame structure. Therefore, the mobile slide (40) must be provided in order to move the filter-holder (4) to the various grinding machines and to the coffee machine. In such a case, the input parameters (I) can be sent by the user to the CPU (3) by means of a user interface (6) that can consist in a control panel (60) of the automatic coffee vendor machine or in the smart device (61) of the user wherein the app (62) is installed.

Fig. 3 shows a possible table of the input parameters (I) that can be selected by the user with the app (62) of the smart device or by the operator/user with the control panel (60).

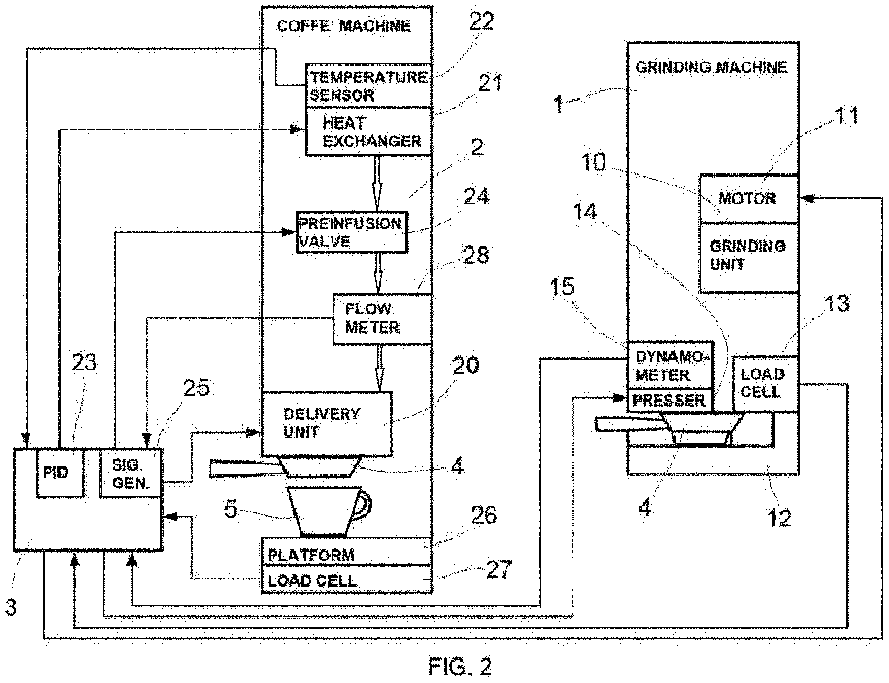

With reference to Fig. 2, this description continues with an explanation on how to control the output parameters (O).

Each grinding machine (1) comprises a grinding unit (10) suitable for grinding coffee beans in order to obtain ground coffee. The grinding unit (10) is operated by an electric motor (11) connected to the CPU (3).

The grinding machine (1) also comprises a support (12) suitable for receiving and supporting the filter-holder (4). The support (11) is operatively connected to a load cell (13) suitable for detecting the weight of the filter-holder (4) when the filter-holder (49 is positioned on the support (12). The load cell (13) is connected to the CPU (3) that continuously detects the net weight of the ground coffee dispensed in the filter-holder (4), subtracting the tare of the filter-holder from the gross weight of the filter-holder with the ground coffee.

In view of the above, if the CPU (3) has calculated with the algorithm that the grinding machine (1) that is selected based on its coffee mix is to dispense a certain weight of ground coffee of said specific coffee mix, the CPU presets such a weight value. The load cell (13) measures the weight of the ground coffee and the CPU (3) stops the electric motor (11) of the grinding unit when the weight of the ground coffee reaches the preset value.

In this way, if the algorithm has calculated that the ideal mix according to the customer's requirements is to comprise, for example, 3 grams of mix a1, 4 grams of mix a3 and 1 gram of mix a6, the selection parameters (S1, S3, S6) will select the grinding machines that contain the mixes a1, a3 and a6, only enabling the operation of the motors of said grinding machines, and the weight quantity parameters (Q1, Q3, Q6) will control the quantity of coffee to be dispensed by each selected grinding machine, i.e. Q1 = 3g, Q3 = 4g and Q6 = 1g.

The grinding machine (1) also comprises a presser (14) suitable for pressing the ground coffee in the filter-holder (4) with a pressure comprised between 0 and 30 Kg. The presser (14) is connected to the CPU (3). A dynamometer (15) is connected to the presser (14) to detect the pressure exerted by the presser. The dynamometer (15) is connected to the CPU (3).

In view of the above, if the CPU (3) has calculated with the algorithm that the grinding machine (1) selected according to its coffee mix is to press the ground coffee of said specific coffee mix at a certain pressure, the CPU presets such a pressure value. The dynamometer (15) measures the pressure exerted by the presser on the ground coffee and the CPU (3) stops the presser (14) when the measured pressure reaches the preset value.

The output parameter of the pressure of the ground coffee is very important because it affects the porosity that affects the final profile of the coffee.

The coffee machine (2) comprises a delivery unit (20) suitable for delivering pressurized hot water on a ground coffee panel disposed in the filter-holder (4) inserted in the delivery unit (20). The delivery unit (20) comprises an electrically controlled dispensing valve connected to the CPU (3) in order to enable/disable the delivery of pressurized hot water.

The coffee machine (3) comprises a heat exchanger (21) or dedicated boiler provided with a heating element to heat the water that is to be fed to the delivery unit (20). The heating element of the heat exchanger (21) is connected and controlled by the CPU (3).

A temperature sensor (22) detects the temperature of the hot water in the heat exchanger (21). The temperature sensor (22) is connected to the CPU (3).

In this way, if the CPU (3) has calculated with the algorithm that the infusion water supplied to the delivery unit (20) is to have a given temperature, the CPU will set said temperature value. The temperature sensor (22) measures the temperature of the water in the heat exchanger (21) and the CPU (3) controls the delivery unit (20) to deliver hot water, when the water temperature reaches the preset temperature value.

Advantageously, the CPU (3) comprises a PID (Proportional-Integral-Derivative) control system (23) that controls the temperature of the heating element of the heat exchanger. In view of the above, the output parameter (O) of the temperature (T) of the infusion water can follow a temperature profile according to a temperature curve by time unit.

The coffee machine (2) also comprises:
- a pre-infusion valve (24) disposed upstream the delivery unit (20) to control the supply of pressurized hot water during a pre-infusion step and during an infusion step of the ground coffee, and
- a flow meter (28) disposed downstream the pre-infusion valve (24) and upstream the delivery unit (20) to measure the flow of pressurized hot water delivered by the pre-infusion valve (24).

The pre-infusion valve is an electrically controlled valve. The CPU (3) comprises a signal generator (25) suitable for controlling a shutter of the pre-infusion valve (24).

The pre-infusion valve (24) can be of pulsing type, i.e. it may be provided with a shutter that is controlled (open or closed in ON-OFF mode) by means of a pulse train coming from the signal generator (25) that, in such a case, is a pulse generator, such as a PWM (Pulse Width Modulation) device.

The pulse generator (25) can modulate the width of the pulses in such a way to vary the opening and closing frequency of the shutter of the pre-infusion valve (24). When the shutter is open, a pulse of water on the ground coffee contained in the filter-holder is received.

It must be considered that the coffee machine (2) has a water system with a pump that pressurizes the water supplied in the pre-infusion valve. Said pressure is approximately 9-11 bar. Instead, the water flow varies according to the quantity of water per time unit that passes in the pre-infusion valve (24). Such a flow can be controlled by the pulses emitted by the signal generator (25).

The flow/pressure ratio (T) varies when the duration and the frequency of the pulses vary; in fact, the pre-infusion valve is part of a water circuit with a load loss determined by the ground coffee panel.

The flow meter (28) is connected to the CPU (3) in such a way that the CPU (3) controls the pre-infusion valve (24) based on the desired flow/pressure ratio (R).

Alternatively, the pre-infusion valve (24) can be of programmable proportional type, namely a two-way valve, comprising a shutter suitable for gradually opening and closing the communication between the two ways of the valve, proportionally to a control signal sent by the signal generator (25). In such a case, the signal can be an electric voltage signal.

Additionally or alternatively to controlling the output parameter of flow/pressure ratio (R), the system (100) may comprise a control of the brew rate output parameter (ground coffee weight/liquid coffee weight). For such a purpose, the coffee machine (2) comprises a platform (26) disposed under the delivery unit (20) to receive the cup (5) suitable for being filled with liquid coffee. The platform (26) is mobile and operatively connected to a load cell (27) to detect the weight of the cup (5). The load cell (27) is connected to the CPU (3) that continuously detects the net weight of the liquid coffee dispensed in the cup (5), subtracting the tare of the cup from the gross weight of the cup with the liquid coffee measured by the load cell (27).

Considering that the CPU (3) has stored the weight of the ground coffee in the filter-holder (4) that was measured by the load cells (13) of the grinding machines and the load cell (27) continuously measures the weight of the liquid coffee, the CPU can continuously measure the brew rate (ground coffee weight/liquid coffee weight) and compare it with the preset brew rate (calculated by the algorithm). When the measured brew rate reaches the preset brew rate, the CPU (3) controls the delivery unit in such a way to close the dispensing valve and stop dispensing the liquid coffee.

## Claims

1. Coffee dispensing system (100) comprising:
- a plurality of grinding machines (1) that contain a different coffee bean mix (a1, .... an);
- a coffee machine (2),
- a filter holder (4) suitable for containing a dose of ground coffee, suitable to be disposed in each grinding machine (1) so as to be filled with ground coffee to form a desired dose of ground coffee, and suitable to be placed in the coffee machine (2) for infusing the ground coffee panel and dispensing liquid coffee in a cup (5),
- a CPU (3) operatively connected to said grinding machines (1) and to said coffee machine (2), and
- a user interface (6) operatively connected to said CPU (3) to display information and to enter commands; said user interface (6) being configured in such a way to send input parameters (I) selected by the user based on the desired coffee type to said CPU (3),
wherein said CPU (3) is configured in such a way to receive said input parameters (I) sent by the user interface (6) and calculate output parameters (O) suitable for controlling said grinding machines (1) and said coffee machine (2),
**characterized in that**
said input parameters (I) comprise one or more of the following features: cream, sweetness, acidity, aroma, body, aftertaste, smell, wherein a score is given for each input parameter (I), and
said output parameters (O) comprise:
- selection (S1, ... Sn) to select a set of grinding machines (1) to be used, which are distinguished by the coffee mix (a1, ....an),
- weight quantity (Q1, ... Qn) of the ground coffee to be delivered by each selected grinding machine in order to form a coffee dose,
- pressing (P1, ... Pn) of the ground coffee in the filter-holder (4) in each selected grinding machine,
- temperature (T) of the infusion water in the coffee machine (2),
- flow/pressure ratio (R) of the infusion water in the coffee machine (2) and/or brew rate (B) intended as ratio between the weight of the ground coffee and the weight of the liquid coffee.

2. The system (100) of claim 1, wherein each grinding machine (1) comprises a grinding unit (10) actuated by an electrical motor (11) connected to said CPU (3) and said CPU (3) is configured in such a way to enable the operation of the electrical motors of the grinding machines selected based on said selection parameter.

3. The system (100) of claim 2, wherein each grinding machine (1) comprises:
- a support (12) suitable for supporting said filter holder (4) suitable for being filled with a dose of ground coffee, and
- a load cell (13) connected to said support (12) and electrically connected to said CPU in order to measure the weight of the ground coffee in the filter holder (4),
wherein said CPU (3) is configured in such a way to stop the motor (11) of the grinding machine when the weight of the ground coffee measured by said load cell (13) reaches said weight quantity parameter.

4. The system (100) of any one of the preceding claims, wherein each grinding machine (1) comprises:
- a presser (14) connected to the CPU (3) and suitable for pressing the ground coffee in the filter holder (4), and
- a dynamometer (15) connected to the presser (14) to detect the pressure exerted by the presser and connected to the CPU (3);
wherein said CPU (3) is configured in such a way to stop the presser (14) when the pressure measured by said dynamometer (15) reaches said pressing parameter.

5. The system (100) of any one of the preceding claims, wherein said coffee machine (2) comprises:
- a heat exchanger (21) provided with a heating element to heat the water to be supplied to the delivery unit (20); the heating element of the heat exchanger (21) being connected to and controlled by the CPU (3), and
- a temperature sensor (22) disposed in the heat exchanger (21) to detect the temperature of the hot water; the temperature sensor (22) being connected to the CPU (3);
wherein said CPU (3) is configured in such a way to control said heating element of the heat exchanger in such a way that the water temperature measured by said temperature sensor (22) reaches the value of said temperature parameter (T).

6. The system (100) of claim 5, wherein said CPU (3) comprises a PID (Proportional-Integral-Derivative) control system (23) to control the temperature of the heating element of the heat exchanger (21).

7. The system (100) of any one of the preceding claims, wherein said coffee machine (2) comprises:
- a pre-infusion valve (24) disposed upstream a delivery unit (20) to control the supply of pressurized hot water during a pre-infusion step and during an infusion step of the ground coffee; said pre-infusion valve (24) being an electrically controlled valve, and
- a flow meter (28) disposed downstream the pre-infusion valve and upstream the delivery unit to measure the flow of pressurized hot water delivered by the pre-infusion valve; said flow meter being electrically connected to said CPU (3); and
said CPU (3) comprises a signal generator (25) suitable for controlling a shutter of the pre-infusion valve (24); and said CPU (3) is configured in such a way to control said pre-infusion valve (24) to obtain said flow/pressure ratio (R) parameter of the infusion water.

8. The system (100) of claim 7, wherein the pre-infusion valve (24) is of pulsing type and the signal generator (25) is a PWM device.

9. The system (100) of claim 7, wherein the pre-infusion valve (24) is of programmable proportional type and comprises a shutter suitable for gradually opening and closing the communication between two ways of the valve proportionally to a command signal sent by said signal generator (25).

10. The system (100) of any one of the preceding claims, wherein said coffee machine (2) comprises:
- a platform (26) disposed under the delivery unit (20) to receive a cup (5) suitable for being filled with liquid coffee, and
- a load cell (27) connected to the platform (26) and electrically connected to the CPU (3) to detect the net weight of the liquid coffee delivered in the cup (5);
wherein said CPU (3) is configured in such a way to continuously measure the brew rate of the liquid coffee in the cup (5) and close a dispenser valve of a delivery unit (20) of the coffee machine in order to stop the delivery when the measured brew rate reaches said brew rate parameter.

11. The system (100) of any one of the preceding claims, wherein said user interface (6) comprises a smart device (61) with an app (62) that can be used by the user to select said input parameters (I) and send them to said CPU (3).

12. The system (100) of any one of the preceding claims, wherein said user interface (6) comprises a control panel (60) that is electrically connected to said CPU (3).

13. The system (100) of any one of the preceding claims, comprising a mobile slide (40) suitable for receiving said filter holder (4) in order to sequentially insert said filter holder in said grinding machines and in said coffee machine (2);
wherein said CPU (3) is connected to said mobile slide (40) and is configured in such a way to move said mobile slide (40) based on said selection parameters.

## Patentansprüche

1. Kaffeeausgabesystem (100), umfassend:
- eine Mehrzahl von Mahlwerken (1), die verschiedene Kaffeebohnenmischungen (a1, ...an) enthalten;
- eine Kaffeemaschine (2),
- einen Filterhalter (4), der geeignet ist, eine Portion Kaffeemehl zu enthalten, der geeignet ist, in jedem Mahlwerk (1) angeordnet zu werden, um mit gemahlenem Kaffee befüllt zu werden, um eine gewünschte Portion Kaffeemehl zu bilden, und geeignet ist, in der Kaffeemaschine (2) zum Brühen der Kaffeemehltablette und Ausgeben des flüssigen Kaffees in eine Tasse (5) angeordnet zu werden,
- eine Steuereinheit (3), die mit den Mahlwerken (1) und der Kaffeemaschine (2) wirkverbunden ist, und
- eine Benutzerschnittstelle (6), die mit der Steuereinheit (3) wirkverbunden ist, um Informationen anzuzeigen und Steuerbefehle einzugeben; wobei die Benutzerschnittstelle (6) derart konfiguriert ist, dass sie vom Benutzer auf der Grundlage des gewünschten Kaffeetyps ausgewählte Eingabeparameter (I) an die Steuereinheit (3) sendet,
wobei die Steuereinheit (3) derart konfiguriert ist, dass sie die von der Benutzerschnittstelle (6) gesendeten Eingabeparameter (I) empfängt und Ausgabeparameter (O) berechnet, die geeignet sind, die Mahlwerke (1) und die Kaffeemaschine (2) zu steuern,
**dadurch gekennzeichnet, dass**
die Eingabeparameter (I) ein oder mehrere der folgenden Merkmale umfassen: Cremigkeit, Süße, Säure, Aroma, Körper, Nachgeschmack, Geruch, wobei es für jeden Eingabeparameter (I) eine Punktzahl gibt, und
die Ausgabeparameter (O) umfassen:
- Auswahl (S1, ... Sn), um eine zu verwendende Gruppe von Mahlwerken (1) auszuwählen, die nach der Kaffeemischung (a1, ....an) unterschieden werden,
- Gewichtsmenge (Q1, ... Qn) des Kaffeemehls, das von jedem ausgewählten Mahlwerk ausgegeben werden muss, um eine Kaffeeportion zu bilden,
- Pressung (P1, ... Pn) des Kaffeemehls in dem Filterhalter (4) in jedem gewählten Mahlwerk,
- Temperatur (T) des Brühwassers in der Kaffeemaschine (2),
- Druck-/Durchflussverhältnis (R) des Brühwassers in der Kaffeemaschine (2) und/oder Brühverhältnis (B), im Sinne des Verhältnisses zwischen dem Gewicht des Kaffeemehls und dem Gewicht des flüssigen Kaffees.

2. System (100) nach Anspruch 1, wobei jedes Mahlwerk (1) eine Mahleinheit (10) umfasst, die von einem Elektromotor (11) betätigt wird, der mit der Steuereinheit (3) verbunden ist, und wobei die Steuereinheit (3) konfiguriert ist, um den Betrieb der Elektromotoren des auf der Grundlage des Auswahlparameters ausgewählten Mahlwerks zu aktivieren.

3. System (100) nach Anspruch 2, wobei jedes Mahlwerk (1) umfasst:
- einen Träger (12), der geeignet ist, den Filterhalter (4) zu tragen, der geeignet ist, mit einer Portion Kaffeemehl befüllt zu werden, und
- eine Wägezelle (13), die mit dem Träger (12) verbunden und elektrisch an die Steuereinheit angeschlossen ist, um das Gewicht des Kaffeemehls im Filterhalter (4) zu wiegen,
wobei die Steuereinheit (3) konfiguriert ist, um den Motor (11) des Mahlwerks zu stoppen, wenn das Gewicht des von der Wägezelle (13) gewogenen Kaffeemehls den Gewichtsmengenparameter erreicht.

4. System (100) nach einem der vorstehenden Ansprüche, wobei jedes Mahlwerk (1) umfasst:
- eine Pressvorrichtung (14), die mit der Steuereinheit (3) verbunden und geeignet ist, das Kaffeemehl in dem Filterhalter (4) zu pressen, und
- einen Dynamometer (15), der mit der Pressvorrichtung (14) verbunden ist, um den von der Pressvorrichtung aufgebrachten Druck zu erfassen, und mit der Steuereinheit (3) verbunden ist;
wobei die Steuereinheit (3) konfiguriert ist, um die Pressvorrichtung (14) zu stoppen, wenn der von dem Dynamometer (15) gemessene Druck den Druckparameter erreicht.

5. System (100) nach einem der vorstehenden Ansprüche, wobei die Kaffeemaschine (2) umfasst:
- einen Wärmetauscher (21), der mit einem Heizelement versehen ist, um das der Ausgabegruppe (20) zuzuführende Wasser zu erhitzen; wobei das Heizelement des Wärmetauschers (21) mit der Steuereinheit (3) verbunden und von ihr gesteuert ist, und
- einen Temperatursensor (22), der in dem Wärmetauscher (21) angeordnet ist, um die Temperatur des heißen Wassers zu messen; wobei der Temperatursensor (22) mit der Steuereinheit (3) verbunden ist;
wobei die Steuereinheit (3) konfiguriert ist, um das Heizelement des Wärmetauschers derart zu steuern, dass die von dem Temperatursensor (22) gemessene Wassertemperatur den Wert des Temperaturparameters (T) erreicht.

6. System (100) nach 5, wobei die Steuereinheit (3) ein PID-(Proportional-Integral-Derivative-)Steuersystem (23) umfasst, um die Temperatur des Heizelements des Wärmetauschers (21) zu steuern.

7. System (100) nach einem der vorstehenden Ansprüche, wobei die Kaffeemaschine (2) umfasst:
ein Vorbrühventil (24), das stromaufwärts einer Ausgabegruppe (20) angeordnet ist, um die Zufuhr von druckbeaufschlagtem, heißem Wasser während einer Vorbrühphase und während einer Brühphase des Kaffeemehls zu steuern; wobei das Vorbrühventil (24) ein elektrisch gesteuertes Ventil ist, und
- einen Durchflussmesser (28), der stromabwärts des Vorbrühventils und stromaufwärts der Ausgabegruppe angeordnet ist, um den Durchfluss des aus dem Vorbrühventil auslaufenden heißen, druckbeaufschlagten Wassers zu messen; wobei der Durchflussmesser elektrisch an die Steuereinheit (3) angeschlossen ist; und
die Steuereinheit (3) einen Signalgenerator (25) umfasst, der geeignet ist, einen Schieber des Vorbrühventils (24) zu steuern; und die Steuereinheit (3) konfiguriert ist, um das Vorbrühventil (24) zu steuern, um den Parameter des Druck-/Durchflussverhältnisses (R) des Brühwassers zu erhalten.

8. System (100) nach Anspruch 7, wobei das Vorbrühventil (24) vom pulsierenden Typ ist und der Signalgenerator (25) eine PWM-Vorrichtung ist.

9. System (100) nach Anspruch 7, wobei das Vorbrühventil (24) vom proportionalen, programmierbaren Typ ist und einen Schieber umfasst, der geeignet ist, die Verbindung zwischen den zwei Wegen des Ventils proportional zu einem von dem Signalgenerator (25) gesendeten Steuersignal schrittweise zu öffnen und zu schließen.

10. System (100) nach einem der vorstehenden Ansprüche, wobei die Kaffeemaschine (2) umfasst:
- eine Plattform (26), die unter der Ausgabegruppe (20) angeordnet ist, um eine Tasse (5) zu empfangen, die geeignet ist, mit flüssigem Kaffee befüllt zu werden, und
- eine Wägezelle (27), die mit der Plattform (26) verbunden und elektrisch an die Steuereinheit (3) angeschlossen ist, um das Gewicht des in die Tasse (5) gefüllten flüssigen Kaffees zu messen;
wobei die Steuereinheit (3) konfiguriert ist, um das Brühverhältnis in Bezug auf den flüssigen Kaffee in der Tasse (5) kontinuierlich zu messen und ein Ausgabeventil einer Ausgabegruppe (20) der Kaffeemaschine zu schließen, um die Ausgabe zu unterbrechen, wenn das gemessene Brühverhältnis den Brühverhältnisparameter erreicht.

11. System (100) nach einem der vorstehenden Ansprüche, wobei die Benutzerschnittstelle (6) ein Smart-Gerät (61) mit einer App (62) umfasst, die von dem Benutzer benutzt werden kann, um die Eingabeparameter (I) auszuwählen und an die Steuereinheit (3) zu senden.

12. System (100) nach einem der vorstehenden Ansprüche, wobei die Benutzerschnittstelle (6) ein Bedienfeld (60) umfasst, das elektrisch an die Steuereinheit (3) angeschlossen ist.

13. System (100) nach einem der vorstehenden Ansprüche, umfassend einen beweglichen Schieber (40), der geeignet ist, den Filterhalter (4) aufzunehmen, um den Filterhalter nacheinander in die Mahlwerke und in die Kaffeemaschine (2) einzuführen;
wobei die Steuereinheit (3) mit dem beweglichen Schieber (40) verbunden ist und konfiguriert ist, um den beweglichen Schieber (40) auf der Grundlage der Auswahlparameter zu bewegen.

## Revendications

1. Système (100) pour la percolation du café comprenant :
- une pluralité de moulins à café (1) contenant des mélanges de café différents (a1, ....an) en grains ;
- une machine à café (2),
- un porte-filtre (4) apte à contenir une dose de café en poudre et à être disposé dans chacun des moulins à café (1) de manière à être rempli de café en poudre pour former la dose de café en poudre désirée, et qui est apte à être disposé dans la machine à café (2) pour l'infusion de la dose pressée de café en poudre et la percolation du café liquide dans une tasse (5),
- une unité de commande électronique (3) reliée opérationnellement aux dits moulins à café (1) et à ladite machine à café (2), et
- une interface utilisateur (6) reliée opérationnellement à ladite unité de commande électronique (3) pour l'affichage d'informations et la saisie des commandes ; ladite interface utilisateur (6) étant configurée de manière à envoyer à ladite unité de commande électronique (3) des paramètres d'entrée (I) sélectionnés par l'utilisateur en fonction du type de café qu'il désire,
où ladite unité de commande électronique (3) est configurée de manière à recevoir lesdits paramètres d'entrée (I) envoyés par l'interface utilisateur (6) et calculer des paramètres de sortie (O) aptes à contrôler lesdits moulins à café (1) et ladite machine à café (2),
**caractérisé en ce que**
lesdits paramètres d'entrée (I) comprennent une ou plusieurs des suivantes caractéristiques du café: crémant, doux, amertume, saveur, touche corsée, arôme, arrière-goût, où pour chaque paramètre d'entrée (I) il y a une note, et
lesdits paramètres de sortie (O) comprenant :
- sélection (S1, ... Sn) pour sélectionner un groupe de moulins à café (1) à utiliser, identifiés par le type de mélange de café (a1, ....an),
- quantité en poids (Q1, ... Qn) de café en poudre que chaque moulin à café sélectionné doit débiter pour former une dose de café,
- pressage (P1, ... Pn) du café en poudre dans le porte-filtre (4) dans chaque moulin à café sélectionné,
- température (T) de l'eau d'infusion dans la machine à café (2),
- rapport (R) flux/pression de l'eau d'infusion dans la machine à café (2) et/ou « brew rate » (B) entendu comme rapport entre le poids du café en poudre et le poids du café liquide.

2. Système (100) selon la revendication 1, où chaque moulin à café (1) comprend un groupe de dispositifs de mouture (10) actionné par un moteur électrique (11) branché à ladite unité de commande électronique (3) et ladite unité de commande électronique (3) est configurée de manière à activer le fonctionnement des moteurs électriques des moulins à café sélectionnés en fonction dudit paramètre de sélection.

3. Système (100) selon la revendication 2, où chaque moulin à café (1) comprend :
- un support (12) apte à soutenir ledit porte-filtre (4) en mesure d'être rempli avec une dose de café en poudre, et
- une cellule de charge (13) reliée au dit support (12) et électriquement branchée à ladite unité de commande électronique pour mesurer le poids du café en poudre dans le porte-filtre (4),
où ladite unité de commande électronique (3) est configurée de manière à arrêter le moteur (11) du moulin à café lorsque le poids du café en poudre mesuré par ladite cellule de charge (13) atteint ledit paramètre de quantité en poids.

4. Système (100) selon l'une quelconque des revendications précédentes, où chaque moulin à café (1) comprend :
- un « tamper » (14) relié à l'unité de commande électronique (3) et apte à presser le café moulu dans le porte-filtre (4), et
- un dynamomètre (15) relié au « tamper » (14) pour relever la pression exercée par celui-ci ; dynamomètre lui-aussi relié à l'unité de commande électronique (3) ;
où ladite unité de commande électronique (3) est configurée de manière à bloquer le « tamper » (14) lorsque la pression mesurée par ledit dynamomètre (15) atteint ledit paramètre de pressage.

5. Système (100) selon l'une quelconque des revendications précédentes, où ladite machine à café (2) comprend :
- un échangeur de chaleur (21) muni de résistance électrique chauffante pour chauffer l'eau à alimenter au groupe percolateur (20) ; la résistance électrique de l'échangeur de chaleur (21) étant reliée et commandée par l'unité de commande électronique (3), et
- un capteur de température (22) disposé dans l'échangeur de chaleur (21) pour relever la température de l'eau chaude ; le capteur de température (22) étant relié à l'unité de commande électronique (3) ;
où ladite unité de commande électronique (3) est configurée de manière à contrôler ladite résistance électrique de l'échangeur de chaleur afin que la température de l'eau mesurée par ledit capteur de température (22) atteigne la valeur du dit paramètre de température (T).

6. Système (100) selon la revendication 5, où ladite unité de commande électronique (3) comprend un système de commande PID (Proportionnel-Intégral-Dérivatif) (23) qui contrôle la température de la résistance de l'échangeur de chaleur (21).

7. Système (100) selon l'une quelconque des revendications précédentes, où ladite machine à café (2) comprend :
- une vanne de pré-infusion (24) disposée en amont du groupe percolateur (20) pour contrôler l'alimentation d'eau chaude sous pression pendant une phase de pré-infusion et une phase d'infusion de la poudre de café ; ladite vanne de pré-infusion (24) étant une électrovanne commandée électriquement, et
- un fluxmètre (28) disposé en aval de la vanne de pré-infusion et en amont du groupe percolateur pour mesurer le flux d'eau chaude sous pression qui sort de la vanne de pré-infusion ; ledit fluxmètre étant électriquement branché à ladite unité de commande électronique (3) ; et
ladite unité de commande électronique (3) comprend un générateur de signal (25) apte à commander un obturateur de la vanne de pré-infusion (24) ; et ladite unité de commande électronique (3) est configurée de manière à commander ladite vanne de pré-infusion (24) de façon à obtenir ledit paramètre du rapport (R) flux/pression de l'eau d'infusion.

8. Système (100) selon la revendication 7, où la vanne de pré-infusion (24) est du type à impulsions et le générateur de signal (25) est un dispositif MID.

9. Système (100) selon la revendication 7, où la vanne de pré-infusion (24) est du type proportionnel programmable, comprenant un obturateur apte à ouvrir et fermer progressivement la communication entre deux voies de la vanne, de manière proportionnelle à un signal de commande envoyé par ledit générateur de signal (25).

10. Système (100) selon l'une quelconque des revendications précédentes, où ladite machine à café (2) comprend :
- une plate-forme (26) disposée sous le groupe percolateur (20) pour soutenir une tasse (5) destinée à être remplie de café liquide, et
- une cellule de charge (27) reliée à la plate-forme (26) et électriquement branchée à l'unité de commande électronique (3) pour relever le poids net du café liquide versé dans la tasse (5) ;
où ladite unité de commande électronique (3) est configurée pour mesurer en continu le « brew rate » relatif au café liquide dans la tasse (5) et pour fermer une vanne de débit d'un groupe percolateur (20) de la machine à café afin d'interrompre la percolation lorsque le « brew rate » mesuré atteint ledit paramètre de « brew rate ».

11. Système (100) selon l'une quelconque des revendications précédentes, où ladite interface utilisateur (6) comprend un dispositif intelligent (61) doté d'un programme applicatif (62) qui permet à l'utilisateur de sélectionner lesdits paramètres d'entrée (I) et de les envoyer à ladite unité de commande électronique (3).

12. Système (100) selon l'une quelconque des revendications précédentes, où ladite interface utilisateur (6) comprend un tableau de commande (60) électriquement branché à ladite unité de commande (3).

13. Système (100) selon l'une quelconque des revendications précédentes, comprenant un patin mobile (40) apte à recevoir ledit porte-filtre (4) pour insérer séquentiellement ledit porte-filtre dans lesdits moulins à café et dans ladite machine à café (2) ;
où ladite unité de commande électronique (3) est reliée au dit patin mobile (40) et configurée de manière à déplacer ledit patin (40) en fonction des dits paramètres de sélection.
